# EUROPEAN PATENT APPLICATION

(11) **EP 1 671 528 A1**
(43) Date of publication of application: **21.06.2006**
(21) Application number: 05017372.3
(22) Date of filing: 10.08.2005
(51) Int. Cl.: A01C 23/02, A01M 17/00

(54) **Process for the disinfestation/fertilization of an agricultural area**

(30) Priority: 17.12.2004 IT MI20042419
(71) Applicant: Universita' degli studi di Bari, 70121 Bari (IT)
(72) Inventor: Ciccarese, Franco Dip. Biologia e Patologia Vegeta, 70126 Bari (IT)
(74) Representative: Trupiano, Federica

(57) **Abstract**

Process for fertilisation of agricultural area and/or for disinfestation of agricultural area effective in suppressing pathogens, parasites and weeds, comprising a step of treatment of the soil with ozone.

The process for the fertilisation of agricultural area can also be performed by application to the soil of sewage sludges and/or waste waters and/or vegetation waters in turn treated with ozone for cleaning and disinfection. The process also provides for the regeneration of soilless soil substrates by treatment of said substrates with ozone. The process according to the invention therefore allows effective disinfestation/fertilisation of the ground together with the simultaneous possibility of disposal of large quantities of organic waste materials, currently difficult to dispose of and usable on agricultural areas only in limited quantities.

## Description

### SUBJECT OF THE INVENTION

The present invention concerns a process for disinfestation/fertilisation of agricultural area.

### STATE OF THE ART

Agricultural area represents a particular and fundamental resource in agricultural economy and, for this reason, increasing attention has been paid to its maintenance and to the development of its characteristics. In fact, the exploitation and use of agricultural area for cultivation can impoverish its constituent components, and this can result in reduced culture yield. It is therefore very important to take care of agricultural area, on the one hand by appropriate treatments, for example fertilisation, which can contribute to maintaining/restoring its "precious" components of particular importance for culture growing, and on the other hand by performing disinfestation treatments to eliminate pathogens, parasites and weed seeds.

Agricultural area has been the subject of numerous studies to identify alternative fertilisation systems and in this regard, for example, systems have been studied based on the possibility of using appropriately treated organic waste matter as a fertilising agent, with the dual effect of obtaining effective disposal of said materials and an inexpensive fertilisation system.

The huge mass of organic waste matter produced by urban communities poses serious environmental and economic problems connected with the need for disposal. For example, the aqueous waste treatment process generates a solid residue of organic nature (sewage sludge) and a liquid (waste water) where the contaminating load present in the waste is concentrated. Before final disposal, the residue collected in the solid/liquid treatment processes undergoes numerous chemical-physical processes. The use of waste waters and sewage sludges in agriculture has been one of the most studied topics in the agricultural-environmental field. The quality of this waste has, however, posed serious problems in said regard, since the main contaminants in the sewage sludges, for example, are micro organisms, heavy metals and some persistent organic compounds. Currently the sewage sludge composting process does not guarantee a healthy product or the absence of heavy metals which are present in the sewage sludges in a very high concentration, often above the level permitted in the compost. Consequently, at the moment large-scale disposal of sewage sludges and waste waters on agricultural area is not possible.

An analogous problem occurs with the disposal of vegetation waters, in particular waste from oil presses which, under the current law, can be disposed of by controlled spreading on area used for agriculture. The limits are currently established at 50 m³/ha/year for water from traditional cycle presses and 80 m³/ha/year for water from continuous cycle presses. The vegetation water has a high contaminating load due to its high content of organic substances, acidity (pH 4.8-5), richness in mineral salts and presence of fatty substances and phenolic products.

In addition to the above, the natural organic substrates must be taken into account such as peat, marc, algae and similar and the inorganic substrates such as pearlite, vermiculite, rock wool, expanded clay and similar, which are commonly used for soilless culture. These kind of substrate must be replaced after 1-2 growing cycles as they are often contaminated by phytopathogenic micro organisms and must be consequently disposed of. It is therefore necessary to develop a regenerating treatment for the substrates suitable for soilless culture which permits the use of said substrates in numerous growing cycles.

As regards treatment of agricultural area, and therefore its disinfestation, it is known that in agriculture not only treatment with agricultural drugs aimed at the cultures during the growing cycle, but also preventive treatment of the area, both before planting and after planting, during the growth and development phase, are of fundamental importance. In fact, agricultural area hosts numerous pathogens, parasites and weed seeds and requires one or more appropriate disinfestation treatments, especially in the case of area assigned to cultures with a high added value.

The extent and diffusion of damage caused to agricultural cultures by soil pathogens and parasites is a limiting factor for agricultural production.

So far, methyl bromide (or bromomethane) has been widely used for disinfestation/sterilisation of agricultural area, by means of fumigation, in the open field and in greenhouses before planting. It is used in particular on various horticultural and floricultural cultures and in particular on strawberries. Methyl bromide has a gaseous form at temperatures above approximately 4°C, it is colourless, odourless and very active against nematodes, insects, pathogenic fungi, annual and perennial weeds. Fumigation with methyl bromide is performed by injection of the gas into the ground, which must be subsequently covered with plastic sheeting to limit dispersion into the atmosphere and provide favourable conditions for its sterilising action. Methyl bromide is one of the most toxic organic halides and penetrates the human organism mainly by inhalation, while it can be absorbed by the skin to a more modest and less significant extent. It is also known that methyl bromide significantly contributes to the reduction of the ozone layer in the atmosphere. Due to said characteristic, very negative in environmental terms, and due to its toxicity, methyl bromide has been included among the substances in the Montreal Protocol. The imminent prohibition of this fumigant has stimulated research into techniques that offer an alternative to fumigation with methyl bromide. Research into alternative methods has so far produced poor results, with the proposal of methods already in use previously, characterised by a high environmental impact and limited effectiveness. One of these alternative methods, for example, is the use of 1,3-dichloropropylene, a nematicide comprised in new formulations which can be distributed not only by direct injection into the ground but also via the use of drip irrigation systems. The adoption of this technique, however, requires knowledge of the physical characteristics of the ground and exact determination of water volumes. Another fumigating agent used is chloropicrin, which was also used in small quantities together with methyl bromide as a "smell detector" and which can be used as such in formulations that can be distributed by injection in the ground or by irrigation. Alternatively to the use of potentially toxic and dangerous chemicals, the so-called "solarization" technique can be employed, used in Mediterranean environments as a substitute for fumigation of the ground with chemicals and very often integrated with burial of organic material, the decomposition of which entails the emission of volatile substances that favour the process of fungistasis or are lethal for parasites. This technique, if applied in southern regions where there is plenty of sunshine, has provided satisfactory results but, in the Po Valley for example, it is hindered by the climatic conditions which do not guarantee maintenance of the necessary thermal levels for the success of the treatment. Another known technique is treatment of the ground with steam, after covering the ground with a plastic film inside which the steam is injected. The steam is effective against all soil pathogens and weeds, and the treatment is effective only if temperatures of 60-80°C are reached in the ground for at least 20-30 minutes. This technique is not widely used mainly because the treatment is expensive due to considerable fuel consumption and difficult to apply over large surface areas. The so-called "organic substance" method has also been attempted which, depending on the kind of substance, if present in a large and constant quantity in the ground, maintains a high biological activity and "represses" the pathogens present.

### OBJECTS OF THE INVENTION

The object of the present invention is to provide a process for the fertilisation/irrigation of agricultural area which permits the use of sanitised waste waters and/or purified sewage sludges and at the same time allows disposal thereof, also in large quantities.
A further object of the present invention is to provide a process for the fertilisation/irrigation of agricultural area which allows use of vegetation waters and at the same time allows disposal thereof in large quantities.
A further object of the present invention is to make available a process for the regenerating treatment of substrates suitable for soilless culture.

A further object of the present invention is to make available a process for the disinfestation of agricultural area which is effective in suppressing pathogens, parasites and weeds and which has a low environmental impact.

A further object of the present invention is to make available a process for the disinfestation/fertilisation of agricultural area which is not dangerous to humans and animals and which entails a significant increase in the level of fertility of the ground, with consequent increase in productivity with respect to the cultivation for which said area is intended.

A further object of the present invention is to make available a process for the disinfestation of agricultural area which is inexpensive, which permits the treatment of large areas and which is not significantly conditioned by the climate.

Yet another object of the invention is to make available a process for the disinfestation of agricultural area which can be effectively used before and/or after culture planting.

A further object of the present invention is to make available a process for the disinfestation/fertilisation of agricultural area which provides for the use of an active ingredient that can be generated *in situ.*

A further object of the present invention is to use at least one active ingredient for low environmental impact disinfestation of agricultural area to suppress pathogens, parasites and weeds.

### DESCRIPTION

These and further objects and related advantages, which will be better highlighted by the following description, are achieved by a process for the disinfestation/fertilisation of agricultural area, effective in suppressing pathogens, parasites and weeds, which comprises a step of treatment of the area with ozone, and also by a process for the fertilisation of agricultural area which comprises a phase of treatment of the area with sewage sludges and/or waste waters and/or vegetation waters previously treated with ozone. The above-mentioned objects are also achieved by a process for the regeneration of soilless culture substrates which comprises a phase of treatment of said substrates with ozone.

According to the invention, the treatment of waste waters with ozone permits cleaning and disinfection of said waste waters and makes it possible to use them, for example, as irrigation waters on agricultural area. In the same way, treatment of the sewage sludges with ozone according to the invention permits the use of said sewage sludges, for example, as a substrate suitable for soilless culture, as soil amendments and/or fertilizers for agricultural area. The above therefore serves a dual purpose: on the one hand it makes available an effective process for the treatment of waste waters and sewage sludges which permits the use thereof as fertilisers for agricultural areas and at the same time it provides a process for the disposal thereof, also in significant quantities. In practice, by means of the process object of the present invention, solid and liquid wastes are obtained which can be used in agriculture. The ozone shows a disinfesting action against micro organisms, with bactericidal and fungicidal action and inactivation of viruses. The bactericidal effect is obtained by lethal oxidation of the bacterial protoplasm via ozonolysis of unsaturated fatty acids which make up the membrane, while the effect on viruses is obtained via the inactivation of specific viral receptors used for creation of the bond with the wall of the cell to be invaded. The action of the ozone on the metals present in the sewage sludges, in particular the action on alkaline-earthy metals and on transition metals, determines a reduction in concentration of the available and exchangeable forms of the microelements and of the exchange bases in the ground. Furthermore, the treatment of sewage sludges and waste waters with ozone according to the present invention reduces the organic component thereof, with formation of CO₂ and consequent increase in aeration and porosity of the substrates. The applications of ozone to waste waters and sewage sludges result in cleaning and disinfection from the microbiological point of view, cause oxidation of the heavy metals with reduction of the available form by the plants and, via oxidation of the organic component, make available the fundamental nutritional elements for the plants.

Analogously, the oxidising power of the ozone reduces the contaminating factors of the vegetation waters and solves the problem of their disposal in large quantities. The vegetation waters treated with ozone according to the invention are therefore used advantageously for example as irrigation waters for agricultural area and also in this case, they can be disposed of in large quantities, thus contributing to fertilisation and maintenance of the agricultural area.

As regards regeneration of the soilless soil substrates, the treatment process with ozone, which performs its disinfestation action according to the invention, solves the problem of their replacement after 1 or 2 treatment cycles. In this way, said substrates are "regenerated" and can therefore be used for many more growing cycles, with consequent considerable economic advantages.

In general, according to the invention, the treatment of agricultural area with ozone, either in a gaseous form or dissolved in water, for example by means of underground irrigation, determines an increase in the vegetative development of the plants and a reduction in the pH of the soil. Once the agricultural area is treated with ozone, at least part of the organic nitrogen (C-N-H) linked to the organic component, during the oxidative process undergoes oxidation to nitrate ion (NO₃⁻). The reduction in the pH of the circulating solution and the increase in the oxidised form of the nitrogen contribute to the formation of an environment which can be assimilated to a greater extent by the vegetable species. Treatment of the ground with ozone therefore determines an increase in the fertility of the ground, especially when it is rich in non-decomposed organic matter. Furthermore, the lowering of the pH of the ground is particularly useful and advantageous in the case of alkaline and sub-alkaline soils.

It is therefore evident that ozone treatment of agricultural area, before or after culture planting, ozone treatment of sewage sludges, waste waters, vegetation waters and the like, as well as ozone treatment of substrates suitable for soilless culture, allows disinfestation/fertilisation of the ground and consequently the possibility of disposal in large quantities of organic refuse matter, currently difficult to dispose of and usable on agricultural area only in limited quantities.
When used as a disinfestation/fertiliser directly applied on the agricultural area according to the present invention, the ozone is distributed in the ground in a gaseous form or as ozonised water. The process according to the invention can be applied indifferently on clearing, before planting, or once the cultures have already been planted.

According to a preferred embodiment of the present invention, the ozone is distributed in the ground for example by sub-micro-irrigation systems provided with drip emitters.

Again according to the invention, ozone can be distributed on the surface of the ground, preferably in the form of ozonised water, for example by micro-irrigation pipes with or without mulching.

Again according to the invention, ozone can be advantageously produced *in situ* by generators that directly use the air or oxygen contained in suitable cylinders/gas bottles, for example.

The process for disinfestation/fertilisation of agricultural area according to the invention can be advantageously applied both on cultures in a protected environment (greenhouses) or in the open field for protecting agricultural cultures against pathogens, parasites and weeds and for maintaining soil quality. The process can be applied on a large scale by the farm operators themselves or, alternatively, via a service provided by specialist firms.

Ozone is a strong oxidiser, able to perform a significant biocide and herbicide action in the soil. The ozone molecule is extremely reactive and is able to oxidise numerous cellular components, including amino acids, proteins and lipids. Currently, ozone is used in water potabilisation, waste treatment, treatment of agroindustrial/agro-feeding products after harvesting and in the field of applications in human medicine. Due to its oxidising quality, it promotes the formation of compounds deriving from the organic material present in the soil or present in the sewage sludges, in the waste waters or in the vegetation waters which contribute to the fertilisation of the ground, improving its characteristics and helping to increase the yield and quality of the cultures.

The administration of ozone in the ground, according to the process object of the present invention, is such as to maintain concentrations of ozone in the air below the limits established by the law. In fact, due to its high oxidising properties, once introduced into the ground, the ozone is completely consumed, reacting with the organic and inorganic components of the soil without becoming dispersed in the lower levels of the atmosphere and, at the same time, without accumulating in the soil. In the same way, ozone treatment of sewage sludges, waste waters, vegetation waters and soilless soil substrates is such as not to create accumulation above the limits permitted by the law.

In practice, as soon as it has been administered in the soil or in the substrate, the ozone exercises its strong oxidising action, thus performing its disinfestation function vis-à-vis pathogens, parasites and weeds, its oxidant characteristic vis-à-vis any organic and/or inorganic material present and at the same time rapidly decomposing into oxygen, thus avoiding dispersion both in the ground and in the atmosphere, and in the environment in general, of products that are potentially toxic and/or with a strong environmental impact.

Due to its characteristics, ozone has a short life and remains briefly as such, rapidly decomposing into oxygen. Any accidental losses of ozone can, however, be neutralised by using efficient catalysts, for example thermocatalytic ozone destroyers.

As already said, no valid and effective processes with low environmental impact are currently available for the disinfestation of the soil, which offer an alternative to fumigation with methyl bromide. The process of disinfestation of the soil according to the present invention by treatment of the ground with ozone therefore represents a highly innovative and surprisingly effective system. The possibility of producing ozone (utilized as active ingredient) *in situ* furthermore permits a high level of environmental safety to be maintained, avoiding possible problems due to transport and storage of the active ingredient and thus guaranteeing greater operator safety. In case of the most common disinfestation agents used according to the known art, since they are toxic products, various safety problems arose connected with transport and storage of the same. Again due to its characteristics and properties, ozone has a low persistence in the environment and does not release toxic compounds, determining very low risks for the operators and for the environment.

An example of process according to the present invention is illustrated below, for indicative non-limiting purposes, said process concerning the administration of ozone for disinfestation/fertilisation of agricultural area.

According to the invention, the ozone, as already said, can be administered in the ground either in gaseous form or dissolved in water.

In the first case, the ozone produced *in situ* by a suitable generator is conveyed into the sub-irrigation system and, via nozzles positioned for example at a fixed distance of approximately 30 cm, along drip emitters buried at a depth of approximately 20 cm, it is distributed in the previously moistened soil.

In the second case, via the Venturi system or by means of injectors, the ozone is blown directly into the irrigation water and, dissolved in it, is distributed in the soil. Sub-irrigation is an innovative system which, in addition to improving irrigation efficiency, reduces water consumption and can be used for organic irrigation. It is therefore increasingly widespread and hence can also be used for the administration of ozone.

According to the present invention, ozonised water represents the preferred method of administration. In both methods of administration (gaseous ozone and ozonised water), doses of approximately 150 kg/ha have determined satisfactory disinfestation of the soil.

The process according to the present invention is therefore suitable for application mainly in the industrialised countries with advanced agricultural systems, and in particular in those countries where the use of methyl bromide will be (or is already) prohibited as a fumigating agent for disinfestation of agricultural area. In particular, the process object of the present invention is advantageously applicable in those countries where agricultural cultivation in a protected environment is particularly developed since, in these conditions, damage by soil pathogens and parasites is very frequent and financially significant.

In addition to being applicable in geographical areas with intensive technologically advanced agriculture, the process according to the invention is also suitable for developing countries, with a view to modern sustainable agriculture.

## Claims

1. Process for disinfestation and/or fertilisation of agricultural area comprising a step of treatment of the soil with ozone and/or a step of application to the soil of sewage sludges and/or waste waters and/or vegetation waters treated with ozone.

2. Process for the regeneration of soilless soil substrates comprising a step of treatment of said substrates with ozone.

3. Process according to claim 2, **characterised in that** said substrates are chosen from peat, marc, algae, pearlite, vermiculite, rock wool, expanded clay.

4. Process for the cleaning and disinfecting treatment of waste waters and/or sewage sludges and/or vegetation waters comprising a step of treatment with ozone.

5. Process according to claims 1 and 4, **characterised in that** said vegetation waters come from oil press wastes.

6. Process according to claim 1, **characterised in that** said disinfestation is effective in suppressing pathogens, parasites and weeds.

7. Process according to claim 1, **characterised in that** said ozone is distributed in the soil in a gaseous form.

8. Process according to claim 1, **characterised in that** said ozone is distributed in the soil in the form of ozonised water.

9. Process according to claims 6 to 8, **characterised in that** it is performed prior to culture installation.

10. Process according to claims 6 to 8, **characterised in that** it is performed after culture installation.

11. Process according to the preceding claims, **characterised in that** said ozone is distributed in the soil through underground/sub irrigation systems.

12. Process according to claim 11, **characterised in that** said systems are micro irrigation systems provided with drip emitters.

13. Process according to claim 12, **characterised in that** said systems are provided with nozzles positioned at a distance of 30 cm and that said emitters are underground emitters positioned at a depth of 20 cm.

14. Process according to claim 8, **characterised in that** said ozonised water is distributed on the surface of the ground by micro irrigation pipes.

15. Process according to the preceding claims, **characterised in that** said ozone is generated *in situ.*

16. Process according to the preceding claims, **characterised in that** it is applied to areas intended for culture growing in a protected environment.

17. Process according to the preceding claims, **characterised in that** it is applied to areas intended for open field culture growing.

18. Process according to claims 11 to 13, **characterised in that** said ozone is used at a dose of 150 kg/ha.

19. Use of ozone for disinfestation of agricultural areas for the suppression of pathogens, parasites and weeds.

20. Use of ozone for the fertilisation of agricultural area.

21. Use of ozone for cleaning and disinfection treatment and/or regeneration of sewage sludges and/or waste waters and/or vegetation waters and/or soilless soil substrates.

22. Agricultural area treated with ozone for fertilisation and/or disinfestation to suppress pathogens, parasites and weeds.

23. Agricultural area treated with sewage sludges and/or waste waters and/or vegetation waters treated with ozone for cleaning and disinfection.

24. Soilless soil substrates subjected to regenerating treatment with ozone.
